(19) **Europäisches Patentamt European Patent Office Office européen des brevets**

(11) **EP 2 062 018 B1**

(12) **EUROPEAN PATENT SPECIFICATION**

(45) Date of publication and mention
of the grant of the patent:
**07.03.2012 Bulletin 2012/10**

(21) Application number: **07810297.7**

(22) Date of filing: **10.07.2007**

(51) Int Cl.:
**G02B 26/06** (2006.01)    **G02B 5/30** (2006.01)

(86) International application number:
**PCT/US2007/015695**

(87) International publication number:
**WO 2008/054558 (08.05.2008 Gazette 2008/19)**

(54) **DEVIATION ANGLE SELF COMPENSATING SUBSTANTIALLY ACHROMATIC RETARDER**

IM WESENTLICHEN ACHROMATISCHER RETARDIERER MIT ABWEICHUNGSWINKEL-
SELBSTKOMPENSATION

RETARDATEUR SENSIBLEMENT ACHROMATIQUE À COMPENSATION AUTONOME DE L'ANGLE
DE DÉVIATION

(84) Designated Contracting States:
**DE FR GB**

(30) Priority: **31.10.2006 US 590408**
**04.12.2006 US 633138**

(43) Date of publication of application:
**27.05.2009 Bulletin 2009/22**

(73) Proprietor: **J.A. WOOLLAM CO. INC.**
**Lincoln NE 68508 (US)**

(72) Inventor: **The designation of the inventor has not
yet been filed**

(74) Representative: **Freeman, Avi
Beck Greener
Fulwood House
12 Fulwood Place
London
WC1V 6HR (GB)**

(56) References cited:
EP-A- 0 307 094        DE-A1- 3 627 878
GB-A- 1 119 240        US-A- 4 917 461
US-A- 5 706 212        US-A- 5 751 482
US-A1- 2002 181 101    US-A1- 2006 023 308
US-B1- 6 456 376       US-B1- 6 546 159

• NAGIB N: "Phase retarders highly insensitive to the input angle" 1 March 1998 (1998-03-01), APPLIED OPTICS, OSA, OPTICAL SOCIETY OF AMERICA, WASHINGTON, DC, PAGE(S) 1231 - 1235 , XP007909727 ISSN: 0003-6935 * the whole document *

• NAGIB N N ET AL: "Total internal reflection phase retarders constructed from prisms; Total internal reflection phase retarders constructed from prisms" 1 April 2004 (2004-04-01), JOURNAL OF OPTICS. A, PURE AND APPLIED OPTICS, INSTITUTE OF PHYSICS PUBLISHING, BRISTOL, GB, PAGE(S) 425 - 428 , XP020081415 ISSN: 1464-4258 * the whole document *

EP 2 062 018 B1

**Description**

The present invention relates to a system for introducing a relative phase retardation into orthogonally polarized components of an incident electromagnetic beam.

Systems of the invention may be used to provide a substantially achromatic retarder which uses multiple total internal reflections of a single, undeviated, transmitted beam to generate retardance. The reflections are oriented to minimize changes in the net retardance against the input beam angle over a wide spectral range, namely, 190 - 1700 nm, as a function of system translation and rotation. The retarders are suitable for use in a rotating compensator ellipsometer or polarimeter.

To obtain acceptable ellipsometer and/or polarimeter performance over a wide spectral range, compensator-based ellipsometer and/or polarimeter designs require a compensator element that provides retardance within a certain acceptable range over the entire spectral range. Traditionally, birefringent waveplates of quartz or $MgF_2$ have been used as compensator elements in rotating element designs. A single waveplate exhibits a (1/wavelength) dependence in retardance vs. wavelength, while a dual/multiple waveplate design, (as disclosed in US Patent No. 6,353,477), can minimize the effect of the (1/wavelength) dependence.

Relevant patents are US patents Nos: 5,706,212, 6,353,477, 5,963,325, 6.141,102, 6,084,675, 6,118,537, 6,100,981, 6,084,674, and 6,084,675. There is also US published application No. US 2007/0146706.

D2, NAGIB N ET AL: "Total internal reflection phase retarders constructed from prisms; Total internal reflection phase retarders constructed from prisms" 1 April 2004 (2004-04-01), JOURNAL OF OPTICS. A, PURE AND APPLIED OPTICS, INSTITUTE OF PHYSICS PUBLISHING, BRISTOL, GB, PAGE(S) 425 - 425, XP020081415 ISSN: 1464-4258, describes the construction of a rhomb-type total internal reflection phase retarder from prisms.

US-A-6456376 describes a spectroscopic rotating compensator ellipsometer system arranged such that the electromagnetic beam intensity is caused to quickly decay to zero as a function of radius.

D1, NAGIB N: "Phase retarders highly insensitive to the input angle" 1 March 1998 (1998-03-01), APPLIED OPTICS, OSA, OPTICAL SOCIETY OF AMERICA, WASHINGTON, DC, PAGE(S) 1231 - 1235, XP007909727 ISSN: 0003-6935 describes a retarder, for use at a specified wavelength, which is insensitive to changes in the incident angle of an input beam.

Specifically, D1 describes system for introducing a relative phase retardation into orthogonally polarized components of an electromagnetic beam entered thereinto, said system consisting of at least two sequential elements oriented with respect to one another such that said entered electromagnetic beam undergoes total internal reflection at least once in each of the at least two elements;

the sequence, orientation, geometry, and symmetry of the elements being such that the locus of an output beam is substantially undeviated from the locus of the input beam;

wherein two of said sequential elements are parallelogram shaped rhombs, each said rhomb having first, second, third and fourth sides, said first and third sides being parallel to one another and said second and fourth sides being parallel to one another, said first and second sides of said first parallelogram shaped rhomb, and said second and third sides of said second parallelogram shaped rhomb meeting one another at angles greater than ninety degrees therebetween, and said second and third sides of said first parallelogram shaped rhomb and said first and second sides of said second parallelogram shaped rhomb meeting one another at angles less than ninety degrees therebetween,

said at least two parallelogram shaped rhombs being oriented with their first and third sides being substantially parallel to one another;

whereby an input beam of electromagnetic radiation caused to enter the first side of one parallelogram shaped rhomb, at a substantially normal angle thereto, then proceeds so that it internally reflects from said fourth and second sides thereof, and then exits said third side in a direction such that it then enters the first side of the second parallelogram shaped rhomb at a substantially normal angle thereto, and then proceeds so that it internally reflects from said second and fourth sides thereof, and then exits said third side thereof.

However, as D1 is for use at a single wavelength, spectral achromaticity is of secondary importance.

The present invention seeks to provide a system for introducing a relative phase retardation into orthogonally polarized components of an incident electromagnetic beam with improved characteristics.

According to the present invention a system for introducing a relative phase retardation into orthogonally polarized components of an incident electromagnetic beam as defined above is characterised in that it is for use over the spectral range of 190 to 1700 nm, in that the parallelogram shaped rhombs are each made from fused silica, in that at least one of the second and fourth sides of at least one of the parallelogram shaped rhombs has a coating thereon of $MgF_2$ which has a lower refractive index from that of the fused silica from which the corresponding parallelogram shaped rhomb is comprised, and in that each coating of $MgF_2$ is between 30-45 nm.

Preferably, the angles of the parallelogram shaped rhombs are 36, 144, 36, and 144 degrees or 45, 235, 45 and 235 degrees.

Preferably, the coating of $MgF_2$ is 35 nm.

In an embodiment, one of the parallelogram shaped rhombs is formed by a combination of two sequential elements, and the other parallelogram shaped rhomb is formed by a combination of two sequential elements, each said sequential element being a right angle prism having right angle sides adjacent to the right angle thereof and a side (ha, hc, hc, hd) opposite the right angle thereof; said right angle prisms being oriented with respect to one another such that, as viewed in side elevation, the first right angle prism is positioned so that its side (ha) opposite the right angle is facing downwardly and to the right, and so that directly above the first right angle prism is the second right angle prism, which is oriented so that its side (hb) opposite the right angle thereof is facing upwardly and to the left, and so that directly to the right of the second right angle prism is the third right angle prism which is oriented so that its side (hc) opposite the right angle thereof is facing upwardly and to the right, and so that directly below the third right angle prism is the fourth right angle prism, oriented so that its side (hd) opposite the right angle thereof is facing downwardly and to the left.

In an embodiment, the locus of the input beam is oriented substantially but not exactly, perpendicularly to the first side of the first parallelogram shaped rhomb.

In a preferred embodiment, the system further comprises at least one selection made from the group consisting of:

at least one of the sequential elements has a mechanism for translating and/or tilting the element, for the purpose of aligning the system such that the output beam is substantially undeviated from said input beam;
at least one of the sequential elements has a coating upon a surface thereof through which the beam of electromagnetic radiation enters or exits, said coating having a different refractive index from that of the material from which said corresponding element is comprised;
there is present an additional sequential multiple wedge system in said system for introducing a relative phase retardation into orthogonally polarized components of an electromagnetic beam, wherein one said wedge can be rotated with respect to another and/or both wedges can be rotated simultaneously, for the purpose of aligning the system such that the output beam is substantially undeviated from said input beam.

Preferably, the third side of the first parallelogram shaped rhomb is adjacent to the first side of the second parallelogram shaped rhomb, the said third and first sides being substantially, but not exactly, parallel and defining an acute angle therebetween.

Embodiments of the present invention will hereinafter be described, by way of example, with reference to the accompanying drawings, in which:

Fig. 1 shows retardance results from a retarder comprising two birefringent waveplates over a spectroscopic range;

Fig. 2 shows the Root Mean Squared (RMS) noise in ellipsometric parameters N, C and S;

Figs. 3a and 3b show retardance vs. internal angle and wavelength, (at a given angle), for a fused silica/air interface;

Fig. 3c shows retardance vs. wavelength, (at a given angle), for a system as shown in Fig. 4c but without coated surfaces;

Fig. 3d show results as in Fig. 3c, but where different refractive index coatings are provided on reflective surfaces of the system;

Fig. 4a shows a Typical 1/4 Wave 90 degree retardance Fresnel rhomb and demonstrates the translation effect;

Fig. 4b shows an embodiment using two Fresnel rhombs to provide a non-deviated beam;

Fig. 4c shows an embodiment of the invention utilising four right angle prisms and optional wedge elements;

Fig. 4d shows an embodiment of a system of the invention with two Fresnel rhombs;

Fig. 5 shows two triangular isosceles prisms, with angles of 26, 128, and 26 degrees;

Fig. 6 shows two parallelogram rhombs, with angles of 36, 144, 36, and 144 degrees;

Figs. 7a, 7b, 8a and 8b show that if the elements are translated up or down, the exiting beam is unchanged;

Figs. 9a, 9b, 10a and 10b show that as the angle of an input beam is changed, the resulting transmitted bean angle does not change;

Figs. 11a - 11f show very small beam polarization change, in terms of PSI and DELTA, for a given change in beam angle;

Fig. 12a demonstrates translation and rotation capability for an element of a two sequential element retarder system;

Fig. 12b shows a two wedge system which may be used in an embodiment of the invention;

Fig. 13 shows a basic ellipsometer or polarimeter comprising at least one rotatable compensator system;

Fig. 14 shows a spectroscopic rotating compensator material system investigation system;

Fig. 15 shows a further ellipsometer or polarimeter system;

Fig. 16 demonstrates an environmental chamber into which systems such as demonstrated in Figs. 13, 14 and 15 systems can be present; and

Fig. 17 demonstrates an entire ellipsometer or polarimeter in an environmental Chamber (CHA).

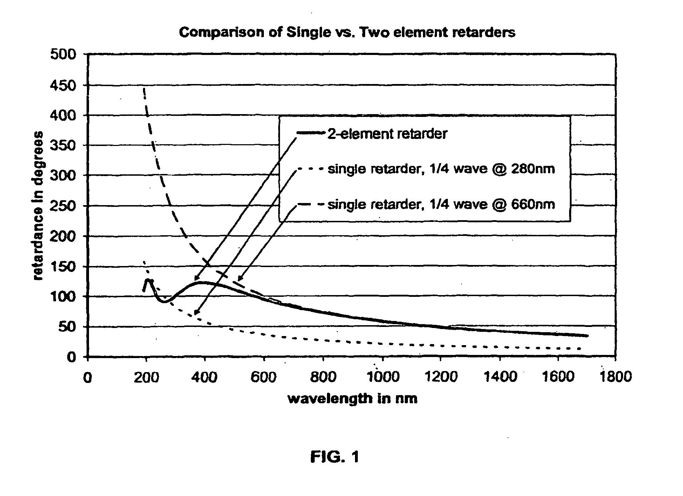

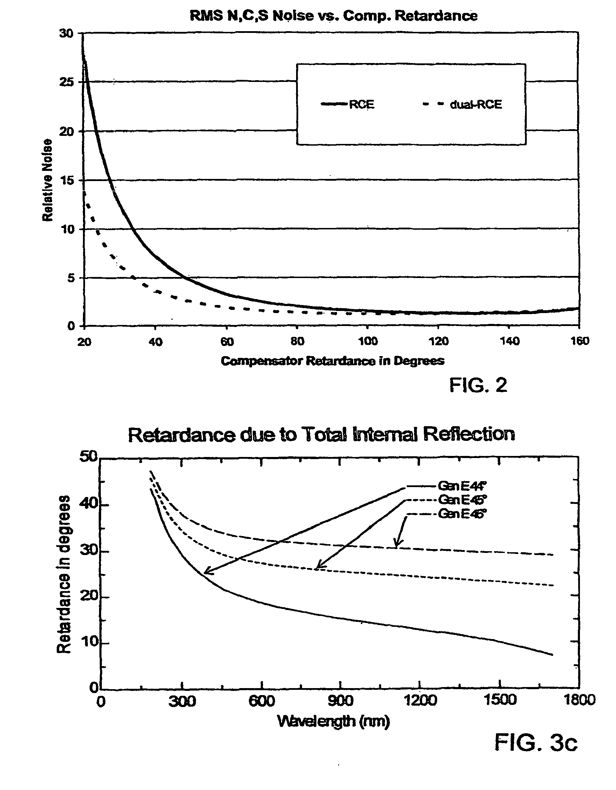

As an introduction, Fig. 1 shows results from a retarder comprising two birefringent waveplates. Note that the retardance varies from 35 - 130 degrees over the typical UV-VIS-NIR spectral range of 190 - 1700 nm. Fig. 2 shows the Root Mean squared (RMS) noise in the ellipsometric parameters;

$$N = \cos (2\Psi);$$

$$C = \sin (2\Psi)\cos(\Delta); \text{ and}$$

$$S = \sin(2\Psi)\sin(\Delta);$$

for the rotating compensator ellipsometer (RCE) and dual rotating compensator ellipsometer (dual-RCE) configurations as a function of compensator retardance.

For a rotating compensator ellipsometer (RCE) configuration it has been determined to be beneficial to keep the retardance between 80 and 160 degrees, as this keeps the relative RMS N, C, S noise to less than 2.0. In that regard the dual-RCE configuration is slightly more forgiving over a retardance range of 60 - 160 degrees. It should be appreciated that Figs. 1 and 2 show that using birefringent waveplates through which a beam of electromagnetic radiation is caused to pass, in wide spectral range rotating compensator ellipsometer systems, compromises the noise performance of the system.

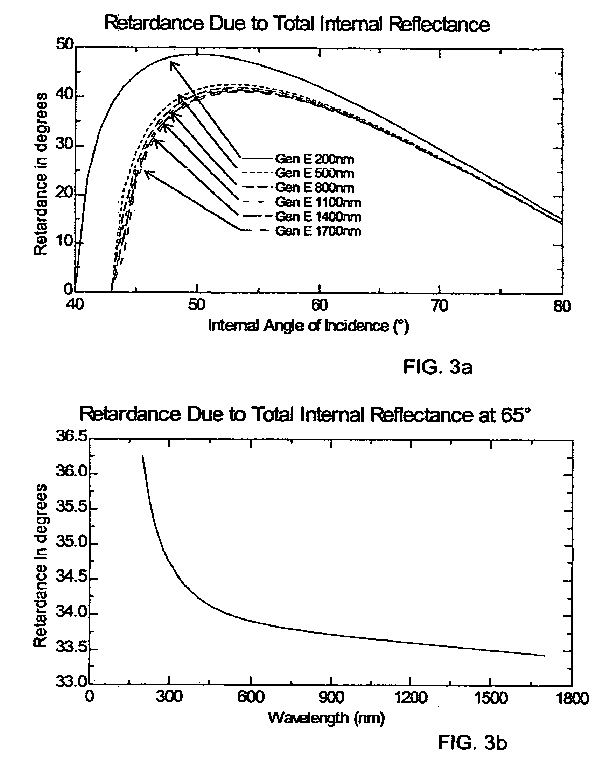

An alternative approach to effecting retardance is by total internal reflection. Figs. 3a and 3b show retardance vs. internal angle and wavelength, (at a given angle), for a fused silica/air interface. Note that the change in retardance vs. wavelength for total internal reflectance is very small compared to the (1 /wavelength) dependence of birefringence-induced retardance. Fresnel rhomb retarders which are based on this effect are readily available. However, a typical 1/4 wave Fresnel rhomb design translates the beam significantly, and the retardance also changes significantly as a function of beam angle, making it impractical to use a Fresnel rhomb in a rotating compensator style ellipsometer or polarimeter design.

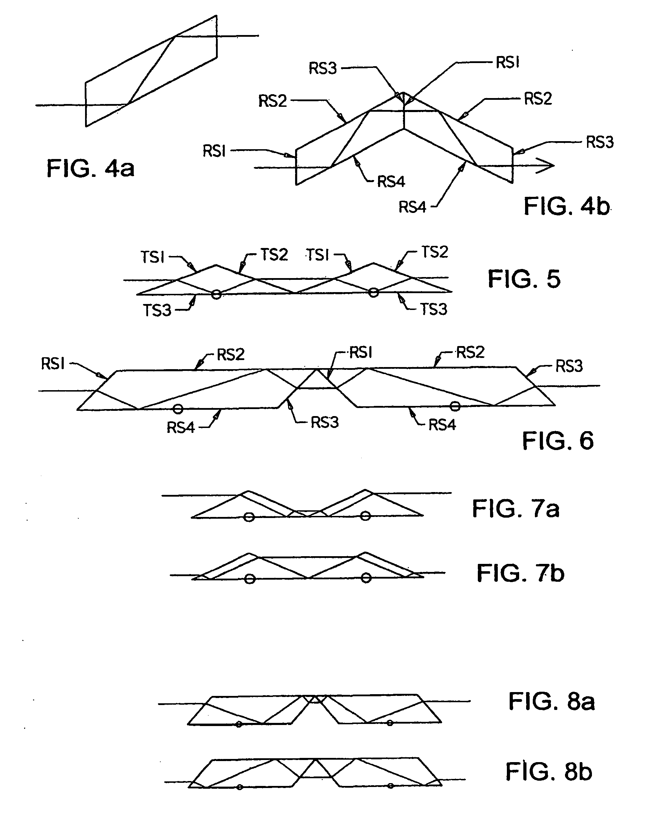

Fig. 4a shows a Typical Wave 1/4 wave 90 degree retardance Fresnel rhomb and demonstrates the translation effect. Fig. 4b shows a known approach to combining two Fresnel rhombs to achieve a substantially non-translated beam. The rhombs each have first (RS1), second (RS2), third (RS4) and fourth (RS4) sides, with the first (RS1) and third (RS3) sides being parallel to one another, and the second (RS2) and fourth (RS4) sides being parallel to one another. The first (RS1) and second (RS2), and the third (RS3) and fourth (RS4) sides of the first Fresnel rhomb meet one another at angles greater than ninety degrees therebetween, and the second (RS2) and third (RS3) sides and said first (RS1) and fourth (RS4) sides thereof meet one another at angles less than ninety degrees therebetween. The at least two parallelogram shaped rhombs are oriented with their first (RSI) and third (RS3) sides being substantially parallel to one another.

In use a beam of electromagnetic radiation caused to enter the first (RS1) side of the first Fresnel rhomb, at a substantially normal angle thereto, then proceeds so that it internally reflects from the fourth (RS4) and second (RS2) side thereof, then exits the third (RS3) side thereof in a direction such that it then enters the first (RS1) side of the second Fresnel rhomb at a substantially normal angle thereto. The beam then proceeds so that it internally reflects from the second (RS2) and fourth (RS4) side thereof, then exits the third (RS3) side thereof.

The embodiment illustrated in Figure 4b is distinguished over known configurations in that at least one of the sides (RS1) (RS2) (RS3) (RS4) of at least one of the parallelogram shaped rhombs has a coating thereupon which has a different refractive index from that of the material from which the corresponding parallelogram shaped rhomb is comprised. Specifically, it is sides (RS2) and (RS4) of each rhomb which are coated. The angles of the parallelogram shaped rhomb can be 36, 144, 36, and 144 degrees or 45, 135, 45 and 135 degrees, and the rhombs can be fabricated from fused silica, with the coating being a material, (eg. $MgF_2$), with a lower refractive index.

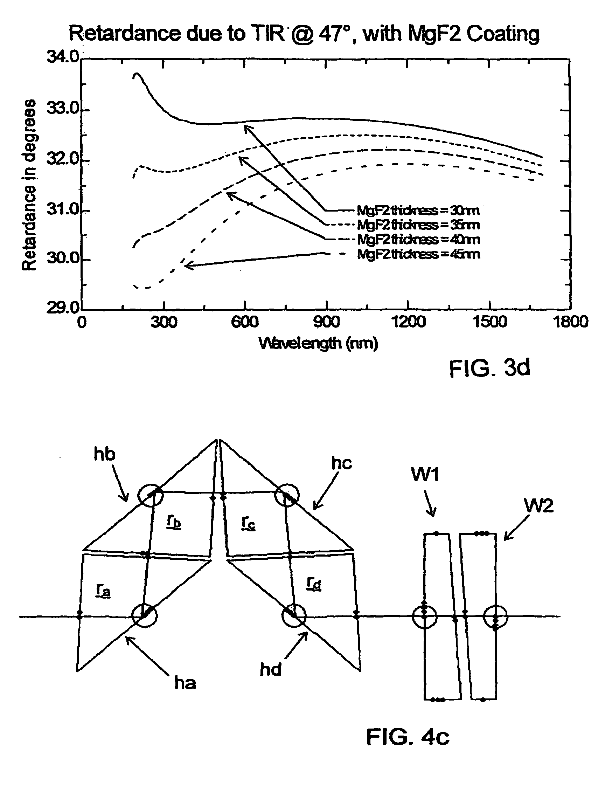

Fig. 4c shows an embodiment of the invention which is a variation of Fig. 4b. In the arrangement of Fig. 4c, four similar right angle prisms, namely first (ra), second (rb), third (rc) and fourth (rd), are shown, having sides opposite their right angles of, respectively, (ha) (hb) (hc) and (hd). As viewed In Fig. 4c the first right angle prism (ra) is positioned so that its side (ha) opposite the right angle thereof is facing downward and to the right. Directly above the first right angle prism (ra) is the second right angle prism (rb), which is oriented so that its side (hb) opposite the right angle thereof is facing upward and to the left. Directly to the right of the second right angle prism (rb) is the third right of right angle prism (rc) which is oriented so that its side (hc) opposite the right angle thereof Is facing upward and to the right. Finally, positioned directly below the third right angle prism (rc) is the fourth right angle prism (rd), oriented so that its side (hd) opposite the right angle thereof is facing downward and to the left.

The sides of each element (ra) (rb) (rc) and (rd) adjacent to the right angles thereof are identifiable as "right angle sides". It is the sides of the elements (ra) (rb) (rc) and (rd) opposite to the right angles that are coated with the material of different refractive index material. As previously, where the elements are made of fused silica the coating can be, for instance, 35nm of lower index $MgF_2$. The coating makes the retardance entered by a total internal reflection from a side opposite the right angle thereof substantially achromatic with range of retardation.

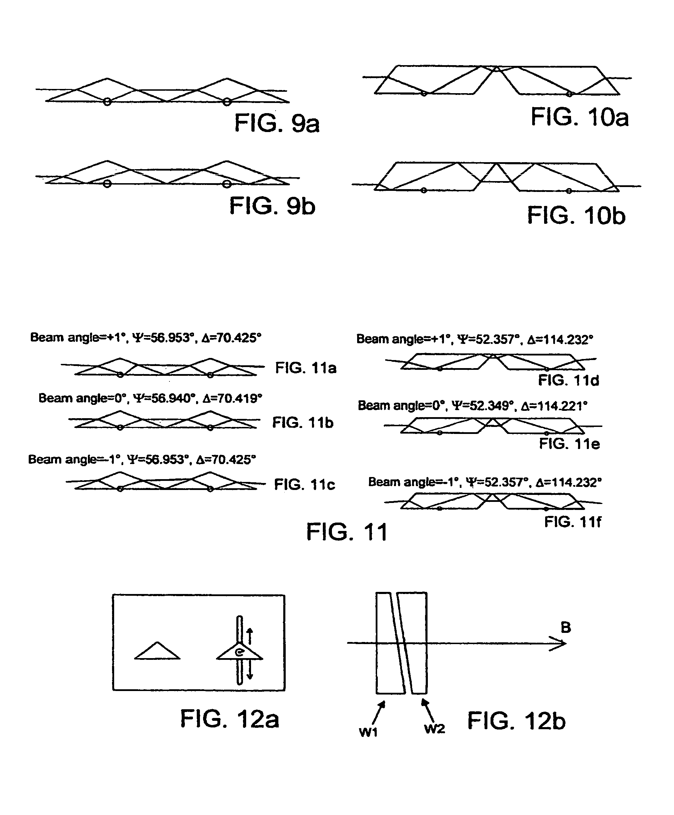

Also shown in Fig. 4c are two optional wedge elements (w1) and (w2), the purpose of which is described with respect to Fig. 12b.

It is noted that in the embodiment of Fig. 4b a coating may also be applied to a reflective outer surface thereof.

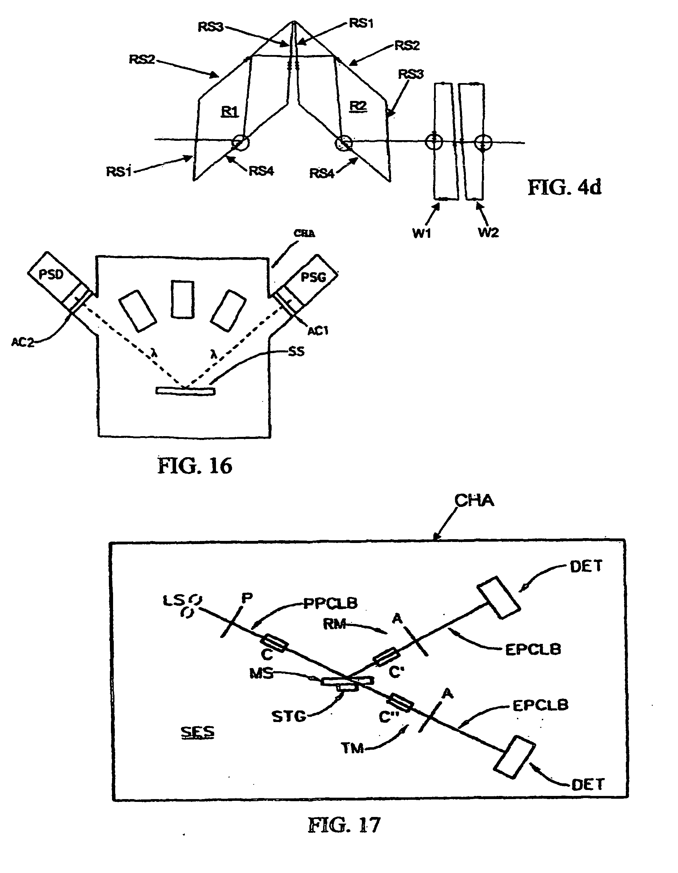

Fig. 4d shows an embodiment of the invention having two Fresnel rhombs (R1) (R2) which are equivalent to the four right angle prisms (ra) + (rb) and (rc) + (rd) of Fig. 4c. Two wedges (w1) (w2) can be combined to result in a non-deviation of a beam (B) caused to pass therethrough. The angles of the rhombs are 45, 135, 45 and 135 degrees. Coatings with a different refractive index from that of the material from which the rhomb is comprised are provided on surfaces thereof as described above with reference to Fig. 4b.

In use of the embodiments of Figs. 4b and 4d, a beam (B) is typically not entered exactly along a normal to the surface entered, (eg. (RS1) in Fig. 4d). This diverts unwanted depolarizing secondary bounces out of the primary beam and such a beam entry locus can be termed "substantially normal" to the surface where the off-normal angle is sufficient to divert said reflections. A typical off-normal angle is about three (3) degrees which deviates transmitted secondary beams by about six (6) degrees. This is sufficient to provide separation from the primary transmitted beam. Also, as explained with respect to Fig. 12b, the wedges (w1) (w2) can be rotated with respect to one another and/or simultaneously to result in a non-deviated beam, (B).

Fig. 3c shows retardance vs. internal angle and wavelength, (at a given angle), for the fused silica/air interface for an arrangement as in Fig. 4c but with no coatings, whereas Fig. 3d shows the results for the same arrangement but with a different refractive index coating on reflective surfaces of a system as described above. Figs. 3a and 3c indicate that near a 45 degree angle of incidence the retardance varies strongly as a function of both wavelength and angle of incidence. A total retardance, resulting from four reflections, varies between 180 degrees at 190nm to less than 90 degrees at 1700nm. Fig. 3d indicates that including a coating on the side of the elements (ra) (rb) (rc) and (rd) opposite their right angle can make the result more achromatic. For Instance, where the elements (ra) (rb) (rc) and (rd) are made from fused silica, and the coatings are between 30 - 45nm of $MgF_2$, the total retardation for four total internal reflections in the described system is between 116 and 136 degrees over a range of wavelengths of 190nm - 1700nm.

In the embodiments described above, there are an even number of multiple total internal reflections to provide the desired amount of retardance. Furthermore, the geometry of the reflections is such that a given change in the input beam angle causes opposite changes in the internal angles of reflection, and therefore, (since the slope of the retardance vs. angle curve above is relatively linear over small angle ranges), the net retardation of the system does not change to the 1 st order for small changes in the beam angle.

An example of another retarder system, which is not an embodiment of the invention claimed herein, is shown in Fig. 5. Shown are two triangular isosceles prisms, each with angles of 26, 128, and 26 degrees. Each triangular shaped prism has first (TS1) and second (TS2) sides of equal length which project from one another at an angle greater than ninety degrees therebetween, and a third side (TS3) oriented opposite said greater than ninety degree angle. The at least two similar triangular shaped prisms are oriented with respect to one another such that the third (TS3) sides thereof are substantially collinear. Thus, a beam of electromagnetic radiation caused to enter the first side of the first thereof, at a non-normal angle thereto, is refracted so that it internally reflects from said third side thereof, then exits said second side thereof in a direction such that it then enters the first side of another thereof at a non-normal angle thereto, is refracted so that it internally reflects from said third side thereof, then exits said second side thereof. The prisms can be fabricated from fused silica.

Another embodiment of a new retarder system, which is not embodiment of the claimed invention, is shown in Fig. 6. Shown are two parallelogram rhombs, with angles of 36, 144, 36, and 144 degrees. The parallelogram shaped rhombs, each have first (RS1), second (RS2), third (RS3) and fourth (RS4) sides, the first (RS1) and third (RS3) sides being parallel to one another, and the second (RS2) and fourth (RS4) sides being parallel to one another. The first (RS1) and second (RS2), and third (RS3) and fourth (RS4) sides of the first parallelogram shaped rhomb meet one another at angles greater than ninety degrees therebetween, and the second (RS2) and third (RS3) sides and the first (RS1) and fourth (RS4) sides thereof meet one another at angles less than ninety degrees therebetween. The two parallelogram shaped rhombs are oriented with their second (RS2) sides being substantially colinear and with their fourth (RS4) sides thereof being substantially colinear, such that a beam of electromagnetic radiation caused to enter the first side (RS1) of the first parallelogram shaped rhomb, at a non-normal angle thereto, is refracted so that it internally reflects from said fourth (RS4) and second (RS2) sides thereof, then exits said third (RS3) side thereof in a direction such that it then enters the first (RS1) side of the second thereof at a non-normal angle thereto, is refracted so that it internally reflects from said second (RS2) and fourth (RS4) side thereof, then exits said third (RS3) side thereof. The parallelogram shaped rhomb can be fabricated from fused silica.

Both of the arrangments shown in Figs. 5 and 6 have input and output surfaces into which a beam is entered, and out of which it exits. These surfaces serve to refract the beam in use. Other surfaces at which total internal reflection occurs are used to enter retardance. It is noted that the Fresnel losses at the refracting interfaces result in a relative attenuation for orthogonally polarized beams. The orthogonal beams are typically denoted p and s for light polarized parallel and perpendicular to the plane of incidence. The relative attenuation and retardation of an optical element can be quantified by the equation below, which is similar to the standard ellipsometry definition. In this case, Tp and Ts are the complex amplitudes of the orthogonal beams which are transmitted through the prism, ($\psi$) is the relative attenuation, and ($\Delta$) is the retardance:

$$Tp/Ts = \tan(\Psi)\, e^{i(\Delta)}.$$

An ideal retarder changes only the relative p-to-s phase, (ie. the retardation), of the beam, and for said case ($\psi$) = 45 degrees. The ($\Delta$) value depends on the number and angle of refracting surfaces in the design. For the triangle design ($\psi$) is about 57 degrees, and for the rhomb design ($\psi$) is about 53 degrees. Since ($\psi$) is dependent on the index of refraction, it varies a few degrees over the 190 - 1700 nm spectral range). While the ($\psi$) value of the retarder does have to be determined in the ellipsometer/ polarimeter system calibration, the sensitivity and accuracy of the instrument has been found to not be significantly degraded as long as ($\psi$) is not too far from 45 degrees. It is noted that the beam enters and exits the elements at near a Brewster angle of incidence, hence substantially 100% of the p polarized light is transmitted through the system.

The geometry and symmetry of the elements results in a number of very useful properties. For example, Figs. 7a, 7b, 8a and 8b show that if the sequential elements are translated up or down as a unit, the exiting beam remains collinear with the input beam. If the sequential elements are rotated, Figs. 9a, 9b, 10a and 10b show that the exiting beam angle is unchanged, (though it is slightly translated).

Figs. 11 a, 11 b, 11 c, 11 d, 11e, 11f show that the most useful property of the new retarder design is that as the angle of the input beam is changed, the re-

sulting polarization properties ($\psi$) and ($\Delta$) change very little. This is because the geometry and symmetry of the designs are such that changes in the refraction and total internal reflection angles have opposite signs for the two elements shown in the system of Figs. 7a, 7b, 8a and 8b, which in turn cancels change in ($\psi$) and ($\Delta$) vs. input beam angle to a 1 st order approximation. Typically the change in ($\psi$) and ($\Delta$) for a one degree change in beam angle is approximately 0.01 degree. Note that Figs. 11a - 11f show that:

Beam angle = +1 degrees, ($\psi$)=56.953, ($\Delta$)=70.425;

Beam angle = 0 degrees, ($\psi$)=56.940, ($\Delta$)=70.419;

Beam angle = -1 degrees, ($\psi$)=56.953, ($\Delta$)=70.425;

Beam angle = +1 degrees, ($\psi$)=52.357, ($\Delta$)=114.232;

Beam angle = 0 degrees, ($\psi$)=52.357, ($\Delta$)=114.221;

Beam angle = -1 degrees, ($\psi$)=52.357, ($\Delta$)=114.232.

The net relative attenuation and retardance ($\psi$) and (A) of the system can be controlled by adjusting the number of total internal reflections (determined by the number and length of the elements), the angles of refraction and reflection (determined by the prism and/or rhomb angles), and the material used to fabricate the elements.

Any transparent, optically isotropic material can be used for the elements, though care should be taken in mounting the elements to minimize strain-induced birefringence. Fused silica is ideal for the UV-VIS-NIR spectral range, but CaF2 is preferable in the DUV, and Si, Ge, ZnSe, KRS5, etc. are suited for use in the IR. Presently, preferred embodiment designs use fused silica, and have the following properties over a wide 190 - 1700 nm spectral range:

triangular prisms: ($\psi$)= 56.382 - 59.286;
(A)= 67.801 - 81.290;

parallelogram rhombs:

($\psi$)= 51.976 - 54.271;
($\Delta$)= 109.795 - 135.7010.

Said examples are not to be considered limiting, however, and other designs are possible, using different materials, angles, and/or geometries. For instance, it might be beneficial to provide for substantially normal angle entry and exit thereby avoiding the effect on ($\psi$), but the key element of any design is that symmetry is employed to enable the following properties:

1. The locus of the beam is not deviated as the system is translated;

2. The angle of the beam locus is not deviated as the system is rotated;

3. The change in polarization properties are minimal for changes in the input beam angle.

Another beneficial aspect of the disclosed arrangements is that, since at least two elements are present, if the elements are not perfectly fabricated and/or aligned, the height and/or tilt of at least one of the elements can be adjusted with respect to the other such that the input beam is substantially undeviated in position and angle by the system. Fig. 12a demonstrates a system for accomplishing this by allowing translation and/or rotation of an element, and Fig. 12b shows an additional sequential two wedge (w1) (w2) system wherein relative rotation of one wedge with respect to the other provides a similar benefit. A system can then include at least one selection from the group consisting of:

at least one of the sequential elements has a mechanism for translating and/or tilting the element, for the purposes of aligning the system such that the output beam is substantially undeviated from said input beam;

there is present an additional sequential two wedge system wherein relative rotation of one wedge with respect to the other and/or combined wedge rotation can be performed for the purposes of aligning the system such that the output beam is substantially undeviated from said input beam.

It is also noted that when practicing beam (B) deviation correction via wedge (w1) (w2) rotations, relative rotation of one wedge with respect to the other and combined rotations of both Wedges (w1) and (w2) can be practiced.

Only a single primary beam is transmitted through the embodiments, as the secondary reflections from the refracting interfaces do not re-enter the primary beam path. This means that only a single polarization state is present in the transmitted beam. In contrast, multiple reflections from the parallel surfaces of birefringent plate retarders result in beam depolarization which can degrade the ellipsometer/polarimeter accuracy if not accounted for properly.

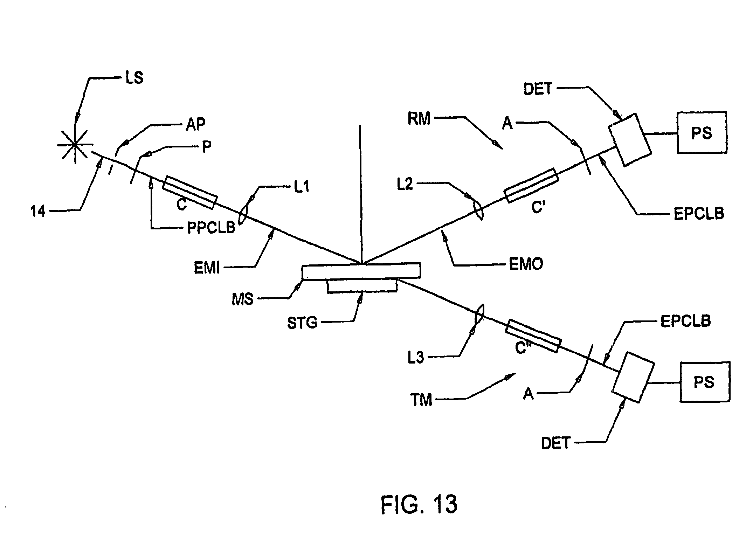

As a primary use of a sequential element system, which is not an embodiment of the claimed invention, is an ellipsometer and polarimeter system as shown in Fig. 13. This system for each of a Reflection and Transmission mode, comprises:

a) a source (LS) of electromagnetic radiation;
b) a polarizer (P);
c) a stage (STG) for supporting a sample (MS);
d) an analyzer (A); and
e) a detector (DET).

The ellipsometer or polarimeter system also has at least one rotatable compensator (C) (C') (C") present at at least one location selected from the group consisting of:

between said source (LS) of electromagnetic radiation and said stage (STG) for supporting a sample (MS); and

between said stage (STG) for supporting a sample (MS) and said detector (DET).

The at least one rotatable compensator (C) (C') (C") comprises at least two sequential elements oriented with respect to one another such that said entered electromagnetic beam undergoes total internal reflection at least once in each of the elements, with the orientation, geometry, and symmetry of the elements being such that the output beam position is undeviated by a translation of the system, and the output beam angle is undeviated by a rotation of the system.

Two triangular shaped prisms may be used for the elements, and the angles of the triangular prisms are 26, 128, and 26 degrees. The fabrication of the prisms can be from fused silica.

Alternatively, two parallelogram shaped rhombs may be used for the elements, with the angles of the parallelogram shaped rhombs being 36, 144, 36, and 144 degrees. The fabrication of the parallelogram can be from fused silica.

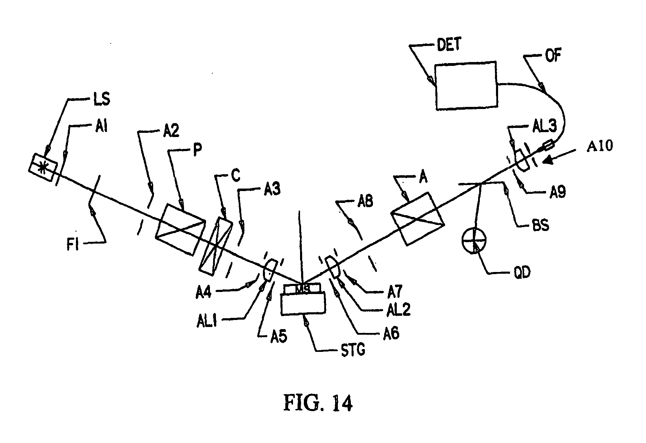

Fig. 14 shows an example of an ellipsometer or polarimeter system, comprising a source (LS) of polychromatic beam of electromagnetic radiation, a first aperture (A1), a second aperture (A2), a fixed polarizer (P), a rotating compensator (C), a third aperture (A3), a fourth aperture (A4), a first substantially achromatic lens (AL1), a fifth aperture (A5), a stage (STG) for supporting a material system, a sixth aperture (A6), a second substantially achromatic lens (AL2), a seventh aperture (A7), an eighth aperture (A8), a fixed analyzer (A), a ninth aperture (A9), a third substantially achromatic lens (AL3), an optical fiber (OF) and a detector system (DET) which contains a dispersive element and a multiplicity of detector elements. There is also a UV filter (F1) present between said source (LS) of polychromatic beam of electromagnetic radiation and said stage (STG) for supporting a material system. When such a spectroscopic rotating compensator material system investigation system is used to investigate a material system (MS) present on said stage (STG) for supporting a material system, said fixed analyzer (A) and fixed polarizer (P) are maintained essentially fixed in position and said rotating compensator (C) is caused to continuously rotate while a polychromatic beam of electromagnetic radiation produced by said source (LS) of a polychromatic beam of electromagnetic radiation is sequentially caused to pass through said first aperture (A1), second aperture (A2), fixed polarizer (P), rotating compensator (C), third aperture (A3), fourth aperture (A4), first substantially achromatic lens (AL1), and the fifth aperture (A5). The polychromatic beam of electromagnetic radiation also passes through said UV filter, then interacts with a material systems (MS) placed on said stage (STG) for supporting a material system (MS). Then, sequentially, the beam passes through said sixth (A6) aperture, second substantially achromatic lens (AL2), seventh aperture (A7), eighth aperture (A8), fixed analyzer (A), ninth aperture (A9), third substantially achromatic lens (AL3), optionally passes through a beam shaping aperture (A10), and then enters said optical fiber (OF) and passes therethrough to enter said detector system (DET).

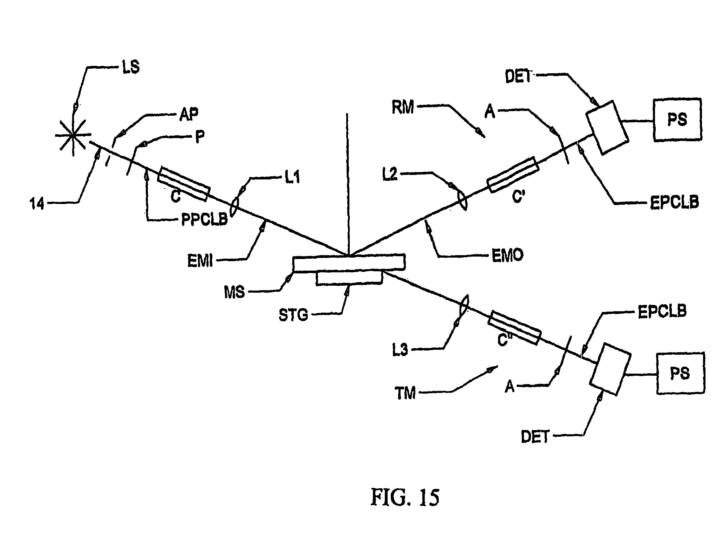

Fig. 15 illustrates another ellipsometer or polarimeter system, similar to that of Fig. 13.

In the following it will be generally assumed that a Material System (MS) under investigation by a Spectroscopic Rotating compensator Material system investigation system is positioned upon the Material System Supporting Stage (STG). This need not be the case, as is described in Patent 5,706,087 wherein a Material System (Sample), (MS) can be positioned in a Magneto-Optic System which is physically too large to be supported by said Material System Supporting Stage (STG), or in an environmental control chamber. Further, especially where Ultraviolet range wavelengths are utilized, the system of Fig. 13, 14 or 15 can be placed into an evacuated or purged, (eg. by nitrogen or argon), Chamber to the end that UV absorbing Oxygen and Water Vapor are not present therewithin. The entire Fig. 13, 14 or 15 system can be so encompassed within a said Chamber, or only the Sample (MS) Stage portion thereof. The Chamber can be of multiple region construction. Fig. 16 shows a Chamber (CHA) which can be interpreted to contain one or multiple interior regions and Fig. 17 shows a one region environmental control chamber (CHA).

In embodiments of the invention as illustrated, for example in Figs. 4b and 4d, the rhombs, (eg. (R1) and (R2) in Fig. 4d), are oriented as functional mirror images of each other, while the side the input beam enters is, in both instances, labeled (RS1). It is felt this was the best way to describe the invention. However, it might lead to some confusion regarding angles between, say, sides (RS1) and (RS2). In the foregoing discussion that angle is identified as being greater than 90 degrees. This is valid for the first (RS1) shown rhomb. For purposes of understanding the foregoing discussion, however, in mirror image the sides (RS1) and (RS3) in the second rhomb (RS2) can be considered reversed when the angles therebetween are described as are those in the first rhomb (RS1).

It will be appreciated that variations in, and modifications of, the embodiments as described and illustrated, may be made within the scope of the accompanying claims.

## Claims

1. A system for introducing a relative phase retardation into orthogonally polarized components of an electromagnetic beam entered thereinto, said system consisting of at least two sequential elements oriented with respect to one another such that said entered electromagnetic beam undergoes total internal reflection at least once in each of the at least two elements;

   the sequence, orientation, geometry, and symmetry of the elements being such that the locus of an output beam is substantially undeviated from the locus of the input beam;

   wherein two of said sequential elements are parallelogram shaped rhombs, each said rhomb having first (RS1), second (RS2), third (RS3) and fourth (RS4) sides, said first (RS1) and third (RS3) sides being parallel to one another and said second (RS2) and fourth (RS4) sides being parallel to one another, said first (RS1) and second (RS2) sides of said first parallelogram shaped rhomb, and said second (RS2) and third (RS3) sides of said second parallelogram shaped rhomb meeting one another at angles greater than ninety degrees therebetween, and said second (RS2) and third (RS3) sides of said first parallelogram shaped rhomb and said first (RS1) and second (RS2) sides of said second parallelogram shaped rhomb meeting one another at angles less than ninety degrees therebetween,

   said at least two parallelogram shaped rhombs being oriented with their first and third sides being substantially parallel to one another;

   whereby an input beam of electromagnetic radiation caused to enter the first (RS1) side of one parallelogram shaped rhomb, at a substantially normal angle thereto, then proceeds so that it internally reflects from said fourth (RS4) and second (RS2) sides thereof, and then exits said third (RS3) side in a direction such that it then enters the first (RS1) side of the second parallelogram shaped rhomb at a substantially normal angle thereto, and then proceeds so that it internally reflects from said second (RS2) and fourth (RS4) sides thereof, and then exits said third (RS3) side thereof;

   said system being **characterised in that** it is for use over the spectral range of 190 to 1700 nm, **in that** the parallelogram shaped rhombs are each made from fused silica, **in that** at least one of the second (RS2) and fourth (RS4) sides of at least one of the parallelogram shaped rhombs has a coating thereon of $MgF_2$ which has a lower refractive index from that of the fused silica from which the corresponding parallelogram shaped rhomb is comprised, and **in that** each coating of $MgF_2$ is between 30-45 nm.

2. A system as claimed in Claim 1, in which the angles of the parallelogram shaped rhombs are 36, 144, 36, and 144 degrees, or 45, 135, 45 and 135 degrees.

3. A system as claimed in Claim 1, wherein the coating of $MgF_2$ is 35nm.

4. A system as claimed in Claim 1, in which one of the parallelogram shaped rhombs is formed by a combination of two sequential elements (ra) and (rb), and the other parallelogram shaped rhomb is formed by a combination of two sequential elements (rc) and (rd), each said sequential element being a right angle prism having right angle sides adjacent to the right angle thereof and a side (ha, hb, hc, hd) opposite the right angle thereof; said right angle prisms being oriented with respect to one another such that, as viewed in side elevation, the first right angle prism (ra) is positioned so that its side (ha) opposite the right angle is facing downwardly and to the right, and so that directly above the first right angle prism (ra) is the second right angle prism (rb), which is oriented so that its side (hb) opposite the right angle thereof is facing upwardly and to the left, and so that directly to the right of the second right angle prism (rb) is the third right angle prism (rc) which is oriented so that its side (hc) opposite the right angle thereof is facing upwardly and to the right, and so that directly below the third right angle prism (rc) is the fourth right angle prism (rd), oriented so that its side (hd) opposite the right angle thereof is facing downwardly and to the left.

5. A system as claimed in Claim 1 or Claim 4, further comprising at least one selection made from the group consisting of:

at least one of the sequential elements has a mechanism for translating and/or tilting the element, for the purpose of aligning the system such that the output beam is substantially undeviated from said input beam;
at least one of the sequential elements has a coating upon a surface thereof through which the beam of electromagnetic radiation enters or exits, said coating having a different refractive index from that of the material from which said corresponding element is comprised;
there is present an additional sequential multiple wedge system in said system for introducing a relative phase retardation into orthogonally polarized components of an electromagnetic beam, wherein one said wedge (w1) can be rotated with respect to another (w2) and/or both wedges (w1,w2) can be rotated simultaneously, for the purpose of aligning the system such that the output beam is substantially undeviated from said input beam.

**Patentansprüche**

1. System zum Einführen einer relativen Phasenverzögerung in orthogonal polarisierte Komponenten eines in dieses eingeführten elektromagnetischen Strahls, wobei das System wenigstens zwei sequentielle Elemente umfasst, die in Bezug zueinander so orientiert sind, dass der eingetretene elektromagnetische Strahl wenigstens einmal in jedem der wenigstens zwei Elemente eine Totalreflexion erfährt;
wobei die Sequenz, Orientierung, Geometrie und Symmetrie der Elemente so ist, dass der Lochs eines Ausgangsstrahls im Wesentlichen unabgelenkt von dem Locus des Eingangsstrahls ist;
wobei zwei der sequentiellen Elemente parallelogrammförmige Rauten sind, wobei jede der Rauten eine erste (RS1), eine zweite (RS2), eine dritte (RS3) und eine vierte (RS4) Seite aufweist, wobei die erste (RS1) und die dritte (RS3) Seite zueinander parallel sind und die zweite (RS2) und vierte (RS4) Seite zueinander parallel sind, wobei die erste (RS1) und zweite (RS2) Seite der ersten parallelogrammförmigen Raute und die zweite (RS2) und dritte (RS3) Seite der zweiten parallelogrammförmigen Raute mit dazwischen liegenden Winkeln aufeinander treffen, die größer als 90 Grad sind, und die zweite (RS2) und dritte (RS3) Seite der ersten parallelogrammförmigen Raute und die erste (RS1) und zweite (RS2) Seite der zweiten parallelogrammförmigen Raute mit dazwischen liegenden Winkeln aufeinander treffen, die kleiner als 90 Grad sind,
wobei die wenigstens zwei parallelogrammförmigen Rauten mit ihren ersten und dritten Seiten im Wesentlichen parallel zueinander angeordnet sind;
wodurch ein Eingangsstrahl einer elektromagnetischen Strahlung gezwungen wird, in die erste (RS1) Seite einer parallelogrammförmigen Raute mit einem normalen Winkel dazu einzutreten, sich dann so fortsetzt, dass er von deren vierten (RS4) und zweiten (RS2) Seite total reflektiert wird und dann aus der dritten (RS3) Seite in solch eine Richtung austritt, dass er dann in die erste (RS1) Seite der zweiten parallelogrammförmigen Raute mit einem im Wesentlichen normalen Winkel dazu eintritt und sich dann so fortsetzt, dass er von deren zweiten (RS2) und vierten (RS4) Seite total reflektiert wird, und dann aus deren dritten (RS3) Seite austritt;
wobei das System gekennzeichnet ist, dass es für die Verwendung über den Spektralbereich von 190 to 1700 nm ist, dass die parallelogrammförmigen Rauten jeweils aus Quarzglas hergestellt sind, dass wenigstens eine der zweiten (RS2) und vierten (RS4) Seiten wenigstens einer der parallelogrammförmigen Rauten eine Beschichtung aus $MgF_2$ aufweist, welche einen geringeren Brechungsindex als das Quarzglas, aus dem die korrespondierende parallelogrammförmige Raute gebildet ist, aufweist, und dass jede Beschichtung aus $MgF_2$ zwischen 30-45

nm beträgt.

**2.** System wie in Anspruch 1 beansprucht, in welchem die Winkel der parallelogrammförmigen Rauten 36, 144, 36 und 144 Grad oder 45, 135,45 und 135 Grad betragen.

**3.** System wie in Anspruch 1 beansprucht, wobei die Beschichtung aus $MgF_2$ 35 nm beträgt.

**4.** System wie in Anspruch 1 beansprucht, in welchem eine der parallelogrammförmigen Rauten mittels einer Kombination aus zwei sequentiellen Elementen (ra) und (rb) gebildet ist und die andere parallelogrammförmige Raute aus einer Kombination aus zwei sequentiellen Elementen (rc) und (rd) gebildet ist, wobei jedes sequentielle Element ein rechtwinkliges Prisma ist, das rechtwinklige, an seinen rechten Winkel angrenzende Seiten und eine seinem rechten Winkel gegenüber liegende Seite (ha, hb, hc, hd) aufweist; wobei die rechtwinkligen Prismen so in Bezug zueinander angeordnet sind, dass - im seitlichen Aufriss betrachtet - das erste rechtwinklige Prisma (ra) so positioniert ist, dass seine Seite (ha) gegenüber dem rechten Winkel nach unten und nach rechts weist, und dass direkt über dem ersten rechtwinkligen Prisma (ra) das zweite rechtwinklige Prisma (rb) ist, welches so orientiert ist, dass seine Seite (hb) gegenüber seines rechten Winkels nach oben und nach links weist, und dass direkt zur Rechten des zweiten rechtwinkeligen Prismas (rb) das dritte rechtwinklige Prisma (rc) ist, welches so orientiert ist, dass seine Seite (hc) gegenüber seines rechten Winkels nach oben und nach rechts weist, und dass direkt unter dem dritten rechtwinkligen Prisma (rc) das vierte rechtwinklige Prisma (rd) ist, das so orientiert ist, dass seine Seite (hd) gegenüber seines rechten Winkels nach unten und nach links weist.

**5.** System wie in Anspruch 1 oder Anspruch 4 beansprucht, ferner umfassend wenigstens eine Auswahl aus der Gruppe bestehend aus:

wenigstens eines aus den sequentiellen Elementen weist einen Mechanismus zum Übersetzen und / oder Kippeln des Elements für dien Zweck des Ausrichten des Systems auf, so dass der Ausgangsstrahl im Wesentlichen unabgelenkt von dem Eingangsstrahl ist;
wenigstens eines der sequentiellen Elemente weist eine Beschichtung auf einer Fläche auf, durch welche der Strahl der elektromagnetischen Strahlung eintritt oder austritt, wobei die Beschichtung einen Brechungsindex aufweist, der sich von dem des Materials, aus welchem das korrespondierende Element gebildet ist, unterscheidet;
es ist ein zusätzliches sequentielles multiples Keilsystem in dem System zum Einführen einer relativen Phasenverzögerung in orthogonal polarisierten Komponenten eines elektromagnetischen Strahls vorhanden, wobei zum Zweck des Ausrichtens des Systems, so dass der Ausgangsstrahl im Wesentlichen unabgelenkt von dem Eingangsstrahl ist, ein Keil (w1) in Bezug auf einen anderen (w2) verdreht werden kann und / oder beide Keile (w1, w2) simultan verdreht werden können.

**Revendications**

**1.** Système pour introduire un retard de phase relative dans des composantes polarisées orthogonalement d'un faisceau électromagnétique appliqué dans celui-ci, ledit système comprenant au moins deux éléments séquentiels orientés l'un par rapport à l'autre de sorte que ledit faisceau électromagnétique appliqué subisse une réflexion interne totale au moins une fois dans chacun des au moins deux éléments ; la séquence, l'orientation, la géométrie et la symétrie des éléments étant telle que le lieu géométrique d'un faisceau de sortie soit sensiblement non dévié par rapport au lieu géométrique du faisceau d'entrée ; dans lequel deux desdits éléments séquentiels sont des rhomboèdres en forme de parallélogramme, chacun desdits rhomboèdres ayant des premier (RS1), deuxième (RS2), troisième (RS3) et quatrième (RS4) côtés, lesdits premier (RS1) et troisième (RS3) côtés étant parallèles l'un à l'autre et lesdits deuxième (RS2) et quatrième (RS4) côtés étant parallèles l'un à l'autre, lesdits premier (RS1) et deuxième (RS2) côtés dudit premier rhomboèdre en forme de parallélogramme et lesdits deuxième (RS2) et troisième (RS3) côtés dudit deuxième rhomboèdre en forme de parallélogramme se rencontrant l'un l'autre selon des angles supérieurs à quatre-vingt-dix degrés entre eux, et lesdits deuxième (RS2) et troisième (RS3) côtés dudit premier rhomboèdre en forme de parallélogramme et lesdits premier (RS1) et deuxième (RS2) côtés dudit deuxième rhomboèdre en forme de parallélogramme se rencontrant l'un l'autre selon des angles inférieurs à quatre-vingt-dix degrés entre eux,
lesdits au moins deux rhomboèdres en forme de parallélogramme étant orientés avec leurs premier et troisième côtés étant sensiblement parallèles entre eux ;
par lequel un faisceau d'entrée de rayonnement électromagnétique, forcé à passer à travers le premier côté (RS1) d'un rhomboèdre en forme de parallélogramme, avec un angle sensiblement normal à celui-ci, poursuit ensuite de sorte qu'il est réfléchi à l'intérieur par lesdits quatrième (RS4) et deuxième (RS2) côtés de celui-ci, et sort ensuite dudit troisième côté (RS3) dans une direction telle qu'il passe ensuite à travers le premier côté (RS1) du deuxième rhomboèdre en forme de parallélogramme avec un angle sensiblement normal à celui-ci, et poursuit ensuite de sorte qu'il est réfléchi à l'intérieur par lesdits deuxième (RS2) et quatrième (RS4) côtés de celui-ci, et sort ensuite dudit troisième côté (RS3) de celui-ci ;

ledit système étant **caractérisé en ce qu'**il est destiné à être utilisé sur une plage spectrale de 190 à 1700 nm, **en ce que** les rhomboèdres en forme de parallélogramme sont réalisés chacun en silice fondue, **en ce qu'**au moins un des deuxième (RS2) et quatrième (RS4) côtés d'au moins un des rhomboèdres en forme de parallélogramme a sur celui-ci un revêtement de $MgF_2$ qui a un indice de réfraction inférieur à celui de la silice fondue qui constitue le rhomboèdre en forme de parallélogramme correspondant, et **en ce que** le revêtement de $MgF_2$ est entre 30-45 nm.

2. Système selon la revendication 1, dans lequel les angles des rhomboèdres en forme de parallélogramme sont de 36, 144, 36 et 144 degrés, ou de 45, 135, 45 et 135 degrés.

3. Système selon la revendication 1, dans lequel le revêtement de $MgF_2$ est de 35 nm.

4. Système selon la revendication 1, dans lequel un des rhomboèdres en forme de parallélogramme est formé par une combinaison de deux éléments séquentiels (ra) et (rb) et l'autre rhomboèdre en forme de parallélogramme est formé par une combinaison de deux éléments séquentiels (rc) et (rd), chacun desdits éléments séquentiels étant un prisme rectangle ayant des côtés à angle droit adjacents à son angle droit et un côté (ha, hb, hc, hd) opposé à l'angle droit de celui-ci ; lesdits prismes rectangles étant orientés l'un par rapport à l'autre de sorte que, tels que vus en élévation latérale, le premier prisme rectangle (ra) est positionné de sorte que son côté (ha) opposé à l'angle droit est orienté vers le bas et vers la droite, et de sorte que directement au-dessus du premier prisme rectangle (ra) se trouve le deuxième prisme rectangle (rb), qui est orienté de sorte que son côté (hb) opposé à l'angle droit de celui-ci est orienté vers le haut et vers la gauche, et de sorte qu'immédiatement à droite du deuxième prisme rectangle (rb) se trouve le troisième prisme rectangle (rc) qui est orienté de sorte que son côté (hc) opposé à l'angle droit de celui-ci est orienté vers le haut et vers la droite, et de sorte que directement au-dessous du troisième prisme rectangle (rc) se trouve le quatrième prisme rectangle (rd), orienté de sorte que son côté (hd) opposé à l'angle droit de celui-ci est orienté vers le bas et vers la gauche.

5. Système selon la revendication 1 ou la revendication 4, comprenant en outre au moins une sélection effectuée parmi le groupe comprenant :

au moins un des éléments séquentiels a un mécanisme pour la translation et/ou le basculement de l'élément, dans le but d'aligner le système de sorte que le faisceau de sortie soit sensiblement non dévié par rapport audit faisceau d'entrée ;

au moins un des éléments séquentiels a un revêtement sur une surface de celui-ci à travers lequel le faisceau de rayonnement électromagnétique entre ou sort, ledit revêtement ayant un indice de réfraction différent de celui du matériau qui constitue ledit élément correspondant ;

un système additionnel de coins multiples séquentiels est présent dans ledit système pour introduire un retard de phase relative dans des composantes polarisées orthogonalement d'un faisceau électromagnétique, dans lequel un desdits coins (w1) peut être pivoté par rapport à un autre (w2) et/ou les deux coins (w1, w2) peuvent être pivotés simultanément, dans le but d'aligner le système de sorte que le faisceau de sortie est sensiblement non dévié par rapport audit faisceau d'entrée.

Comparison of Single vs. Two element retarders

FIG. 1

RMS N,C,S Noise vs. Comp. Retardance

FIG. 2

Retardance due to Total Internal Reflection

FIG. 3c

## Retardance Due to Total Internal Reflectance

Internal Angle of Incidence (°)

Gen E 200nm
Gen E 500nm
Gen E 800nm
Gen E 1100nm
Gen E 1400nm
Gen E 1700nm

FIG. 3a

## Retardance Due to Total Internal Reflectance at 65°

Wavelength (nm)

FIG. 3b

## Retardance due to TIR @ 47°, with MgF2 Coating

FIG. 3d

FIG. 4c

FIG. 4d

FIG. 16

FIG. 17

FIG. 4a

FIG. 4b

RS3 — — RSI
RS2 — — RS2
RSI — — RS3
RS4 — RS4

TSI — — TS2   TSI — — TS2
TS3 — — TS3

FIG. 5

RSI — — RS2   — RSI — RS2   — RS3
RS4 — — RS3   — RS4

FIG. 6

FIG. 7a

FIG. 7b

FIG. 8a

FIG. 8b

FIG. 9a

FIG. 10a

FIG. 9b

FIG. 10b

Beam angle=+1°, Ψ=56.953°, Δ=70.425°

FIG. 11a

Beam angle=0°, Ψ=56.940°, Δ=70.419°

FIG. 11b

Beam angle=-1°, Ψ=56.953°, Δ=70.425°

FIG. 11c

Beam angle=+1°, Ψ=52.357°, Δ=114.232°

FIG. 11d

Beam angle=0°, Ψ=52.349°, Δ=114.221°

FIG. 11e

Beam angle=-1°, Ψ=52.357°, Δ=114.232°

FIG. 11f

FIG. 11

FIG. 12a

FIG. 12b

FIG. 13

FIG. 14

FIG. 15

## REFERENCES CITED IN THE DESCRIPTION

**Patent documents cited in the description**

- US 6353477 B
- US 5706212 A
- US 5963325 A
- US 6141102 A
- US 6084675 A
- US 6118537 A
- US 6100981 A
- US 6084674 A
- US 20070146706 A
- US 6456376 A
- US 5706087 A

**Non-patent literature cited in the description**

- Total internal reflection phase retarders constructed from prisms; Total internal reflection phase retarders constructed from prisms. **NAGIB N et al.** JOURNAL OF OPTICS. A, PURE AND APPLIED OPTICS. IN-STITUTE OF PHYSICS PUBLISHING, 01 April 2004, 425-425
- Phase retarders highly insensitive to the input angle. **NAGIB N.** APPLIED OPTICS. OPTICAL SOCIETY OF AMERICA, 01 March 1998, 1231-1235